# EUROPÄISCHE PATENTSCHRIFT

(11) **EP 1 868 946 B1**
(45) Veröffentlichungstag und Bekanntmachung des Hinweises auf die Patenterteilung: **06.05.2009**
(21) Anmeldenummer: 06776419.1
(22) Anmeldetag: 25.07.2006
(51) Int. Cl.: C02F 1/461, C02F 1/72, C02F 103/00

(54) **VERFAHREN ZUR OXIDATIVEN BEHANDLUNG VON WÄSSRIGEN FLÜSSIGKEITEN**
METHOD FOR THE OXIDATIVE TREATMENT OF AQUEOUS LIQUIDS
PROCÉDÉ POUR LE TRAITEMENT OXIDATIVE DES LIQUIDES AQUEUX

(30) Priorität: 26.08.2005 DE 102005040367
(43) Veröffentlichungstag der Anmeldung: 26.12.2007
(73) Patentinhaber: EVAC GmbH, 22880 Wedel (DE)
(72) Erfinder: WÖRMCKE, Hans, 22880 Wedel (DE)
(74) Vertreter: Glaeser, Joachim
(86) Internationale Anmeldenummer: PCT/EP2006/007362
(87) Internationale Veröffentlichungsnummer: WO 2007/022844

(56) Entgegenhaltungen:
- EP-A2- 0 994 074
- WO-A-94/25402
- WO-A-20/05058761
- DE-A1- 10 352 480
- US-A- 4 115 876
- US-A- 4 292 175
- US-A1- 2003 226 810
- US-B1- 6 547 947

## Beschreibung

Die Erfindung bezieht sich auf eine Anwendung eines Verfahrens zur oxidativen Behandlung von wässrigen Flüssigkeiten vermittels von Oxidationsmitteln, bei welchem die wässrige Flüssigkeit durch einen Elektrolyse-Reaktor geleitet wird, in welchem solche Elektroden eingesetzt sind, die auf Grund hoher Überspannungen (z.B. +3V an der Anode und -1,5V an der Katode) überwiegend hoch aggressive Oxidationsmittel (OH-, O₃, H₂ O₂) bei der elektrochemischen Zersetzung des Wasser erzeugen.

Es ist ein Verfahren zur oxidativen Behandlung von Oberflächen mittels einer Oxidationsmittel enthaltenden Elektrolytflüssigkeit bekannt (DE 102 19 688 A1). Hierbei wird eine Elektrolytflüssigkeit im Kreislauf umgepumpt. Die erforderlichen Oxidationsmittel werden elektrochemisch mit Hilfe von mit einer Diamantschicht versehenen Elektroden in einem Elektrolyse-Reaktor erzeugt. Derartige Elektroden haben die Eigenschaft, bei der Elektrolyse eine große Potentialdifferenz zwischen Katode und Anode zu erzeugen, die deutlich über die üblichen 1,4 Volt hinausgeht und beispielsweise ca. 4,5 Volt betragen kann. Hierbei entstehen vor allem sehr aggressive Hydroxyl-Radikale, aber auch Ozon- und Wasserstoffperoxid. Das bekannte Verfahren wird eingesetzt, um beispielsweise die Oberflächen von Sitizium-Wafern zu reinigen, und zu diesem Zweck werden die Wafer in einen Behälter mit einer Elektrolytflüssigkeit, beispielsweise verdünnter Schwefelsäure, getan.

Bei der vorliegenden Erfindung geht es um ein Verfahren, um Schwarz- und/oder Grauwasser oxidativ zu behandeln, damit ein Endprodukt erzeugt werden kann, das im Wesentlichen aus Wasser besteht.

Unter dem Begriff Schwarzwasser sollen in dieser Anmeldung Fäkalien in mehr oder weniger flüssiger Form verstanden werden. Mit Grauwasser ist das Wasser bezeichnet worden, das beispielsweise von einem Handwaschbecken stammt.

Das nach dem Verfahren gemäß der Erfindung behandelte Wasser wird als Spül- oder Brauchwasser bezeichnet, das heißt also Wasser, welches zum Spülen in einer Toilette eingesetzt werden kann. Nach dem Verfahren gemäß der Erfindung kann das Schwarz- und/oder Grauwasser jedoch soweit aufbereitet werden, dass es, wenn man einmal von geringen Chloridanteilen absieht, durchaus als Frischwasser eingesetzt werden, wobei hier insbesondere der Einsatz als Waschwasser in Toiletten in Zügen oder Flugzeugen gedacht ist.

Ausgehend von dem bekannten Verfahren wird gemäß der Erfindung als wässrige Flüssigkeit Schwarz- und Grauwasser eingesetzt, dieses wird von Grobstoffen befreit, sodann mechanisch zerkleinert, bevor es in den Elektrolyse-Reaktor geleitet wird, um gasförmige Anteile freizusetzen und die verbleibende Restflüssigkeit, die im Wesentlichen aus Wasser besteht, in ein Frisch-, Brauch- und/oder Spülwassersystem einleiten zu können.

Bei einem bevorzugten Verfahren gemäß der Erfindung kann ein Umlaufverfahren eingesetzt werden, das heißt die zu behandelnde Flüssigkeit wird mehrfach durch den Elektrolyse-Reaktor geleitet, so dass dieser in Abhängigkeit von der anfallenden zu behandelnden Flüssigkeitsmenge relativ klein ausgebildet werden kann. Ebenso gut ist aber auch denkbar, hier ein nicht kontinuierliches Verfahren einzusetzen, das heißt, den Elektrolyse-Reaktor in seiner Länge so zu bemessen, dass die zu behandelnde Flüssigkeit bei dem Hindurchlaufen durch den Elektrolyse-Reaktor soweit aufbereitet wird, dass am Ausgang eine Flüssigkeit entnommen werden kann, die im Wesentlichen aus Wasser besteht.

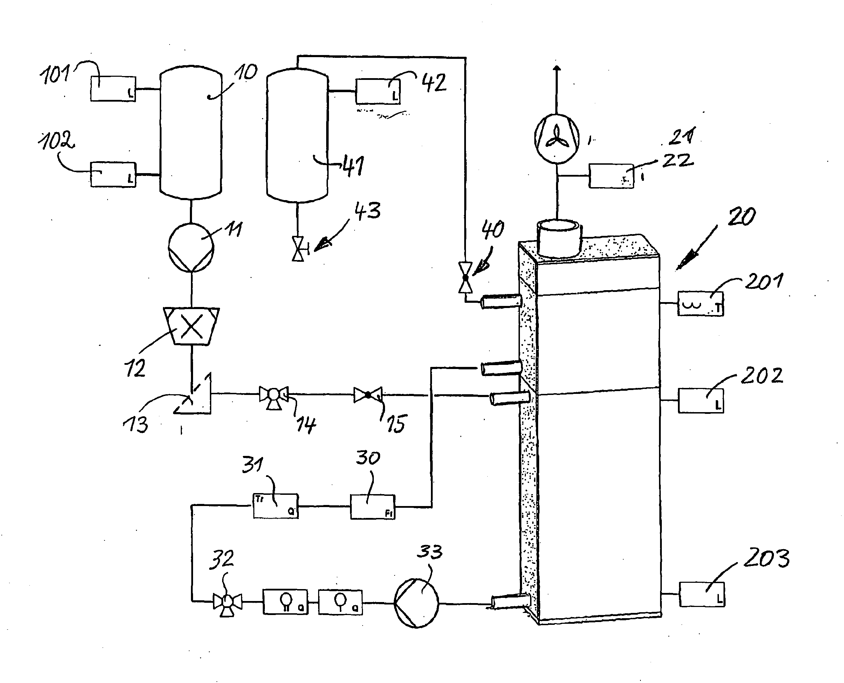

Die Erfindung wird nachstehend anhand der einzigen Figur der Zeichnung beispielsweise erläutert, wobei diese ein Fließbild der Aufbereitung von Schwarzwasser zu Frischwasser zeigt.

In der Figur ist mit 10 ein Schwarzwassertank bezeichnet, in dem beispielsweise Ablaufmasse von einer Toilette oder aber von einem Waschbecken einer Toilette in einem Flugzeug oder in einem Zug aufgefangen wird. In diesem Zusammenhang ist nicht wesentlich, wie die Ablaufmasse dort hinbefördert wird, also über die üblichen Einrichtungen in Hausinstallationen oder über Vakuumeinrichtungen wie diese bei Vakuumtoiletten in Fahrzeugen bekannt sind.

Mit 101 und 102 sind Füllstandsanzeigen des Tanks bezeichnet.

Eine Schwarzwasserpumpe 11 fördert die Ablaufmasse in einen Häcksler 12, in dem die Ablaufmasse zerkleinert wird. Von hieraus gelangt die Ablaufmasse in ein Filter 13 und über ein Ablassventil 14 und ein Zulaufventil 15 in den Elektrolyse-Reaktor 20.

In der Figur nicht gezeigt ist ein Separator, der irgendwo zwischen der Toilette und dem Schwarzwassertank 10 angeordnet werden kann, um solche Teile aus der anfallenden Flüssigkeit zu beseitigen, die nicht der Behandlung unterliegen sollen. Hier werden Teile aussortiert, wie beispielsweise Feuerzeuge, die gelegentlich in einem Becken einer Toilette landen.

In dem Elektrolysereaktor 20 befindet sich eine Vielzahl von diamtbeschichteten Elektroden und sofern beide Elektroden, Katode und Anode, karbonbeschichtet sind, befindet sich zwischen beiden ein Stofftrennmembran. Für die vorliegende Erfindung wesentlich ist, dass derartige Elektroden ausgewählt werden, die eine relativ hohe Spannungsdifferenz erzeugen, von der man weiß, dass insbesondere OH-Radikale erzeugt werden. Diese entstehen aus dem wässrigen Anteil der Fäkalien bzw. des Brauch- und Grauwassers und wirken nun wiederum oxidierend auf die anderen Bestandteile des Brauch- und Grauwassers ein. Bei diesen Bestandteilen handelt es sich fast ausschließlich um organische Verbindungen, die über die OH⁻-Radikale zu Wasser und Kohlendioxid umgewandelt werden. Dies ist der gemäß der Erfindung gewünschte Vorgang, nämlich, dass aus den wässrigen Bestandteilen der Fäkalien die Oxidationsmittel erzeugt werden können, die nun wiederum die organischen Bestandteile der Fäkalien "verbrennen", so dass neben Wasser nur noch Kohlendioxid übrig bleibt.

Die Fäkalien werden in einem Kreislauf geführt, das heißt, sie verlassen den Elektrolyse-Reaktor 20 und über Durchfluss- und Transmissionsströmungs-Messungen, Ermittlung der Reduktion bzw. Oxidation und des PH-Wertes (30, 31, 32) gelangen sie erneut in den Reaktor 20 hinein. Für den Umlauf der Flüssigkeit wird eine Kreiselpumpe 33 eingesetzt. In der Figur ist der Einlauf des Reaktors 20 oben und der Auslauf unten angeordnet, obwohl dies bei einem bevorzugten Verfahren gemäß der Erfindung auch umgekehrt durchgeführt wird.

Nicht gezeigt ist in diesem Kreislauf der Elemente 20, 30, 31, 32 und 33 ein ab- und zuschaltbarer Bypass mit einem Filter. Dieser Filter wird dazu eingesetzt, nicht umgewandelte Bestandteile herauszufiltern, also beispielsweise organische Bestandteile, die wenn auch in geringer Menge in Fäkalien auftreten könnten.

Der Reaktor 20 ist mit Füllstandsanzeigen 202, 203 und einem Temperaturmessgerät 201 versehen.

Weiterhin hat der Reaktor 20 einen nach oben geführten Auslass für Abluft, die mit Hilfe eines Abluftventilators 21 gesteuert über einen Luftstromwächter 22 aus der Anlage herausgeführt wird.

Ist die umlaufende Flüssigkeit genügend lange behandelt worden, kann sie über ein Auslassventil 40 in einen Frischwassertank 41 geleitet werden. Dieser ist mit einer Füllstandsanzeige 42 versehen. Frischwasser kann über ein Ventil 43 entnommen werden.

Bei einem bevorzugten Einsatz des Verfahrens gemäß der Erfindung, etwa in einer Zugtoilette, kann erreicht werden, dass das zur Toilettenspülung notwendige Frischwasser zurück gewonnen werden kann. Das darüber hinaus anfallende behandelte Frischwasser kann ohne Probleme auf der Schiene entsorgt werden.

Wesentlich ist in diesem Zusammenhang der geschlossene Kreislauf, das heißt, das anfallende Schwarzwasser wird solange im Kreislauf geführt, bis es die erforderliche Qualität erreicht hat.

## Patentansprüche

1. Anwendung eines Verfahren zur oxidativen Behandlung von wässrigen Flüssigkeiten vermittels von Oxidationsmitteln, bei welchem die wässrige Flüssigkeit durch einen Elektrolyse-Reaktor geleitet wird, in welchem Elektroden eingesetzt sind, die auf Grund hoher Überspannungen (z.B. +3V an der Anode und -1,5V an der Katode) überwiegend hoch aggressive Oxidationsmittel (OH-, O₃, H₂O₂) bei der elektrochemischen Zersetzung des Wasser erzeugen, auf eine Fäkalien enthaltende Flüssigkeit, die in Toiletten in Fahrzeugen anfällt, wobei die Flüssigkeit in einem Separator von Grobstoffen befreit, sodann mechanisch zerkleinert wird, bevor sie mehrfach durch den Elektrolyse-Reaktor geleitet wird, gasförmige Anteile freigesetzt und anorganische Restbestandteile herausgefiltert werden und die verbleibende Restflüssigkeit, die im Wesentlichen aus Wasser besteht, in ein Frisch-, Brauch- und/oder Spülwassersystem der Toilette eingeleitet wird.

## Claims

1. Use of a method for oxidative treatment of aqueous liquids by means of oxidants, in which the aqueous liquid is passed through an electrolysis reactor in which electrodes are inserted which, by the use of high overvoltages (for example +3 V on the anode and -1.5 V on the cathode) produce predominantly highly aggressive oxidants (OH⁻, O₃, H₂O₂) during the electrochemical decomposition of the water, to a liquid which contains faecal matter and accumulates in toilets in vehicles, with coarse solids being removed from the liquid in a separator and then being mechanically comminuted before they are passed repeatedly through the electrolysis reactor, gaseous components are released and inorganic residual components are filtered out, and the remaining residual liquid, which is composed essentially of water, being passed into a fresh, industrial and/or rinsing water system for the toilets.

## Revendications

1. Utilisation d'un procédé de traitement par oxydation de liquides aqueux au moyen d'agents oxydants, dans lequel le liquide aqueux est acheminé à travers un réacteur d'électrolyse, dans lequel sont montées des électrodes, qui génèrent principalement, en raison de hautes surtensions (par exemple +3 V à l'anode et - 1,5 V à la cathode), des agents oxydants très agressifs (OH⁻, O₃, H₂O₂) lors de la décomposition électrochimique de l'eau, sur un liquide contenant des matières fécales, qui est produit dans des toilettes de véhicules, dans lesquelles le liquide est libéré dans un séparateur de matières grossières, puis broyé mécaniquement avant d'être acheminé à plusieurs reprises à travers le réacteur d'électrolyse, des fractions gazeuses sont libérées et des composants résiduels inorganiques sont éliminés par filtration et le liquide résiduel restant, qui est constitué sensiblement d'eau, est déversé dans un système d'eau d'appoint, d'eau industrielle et/ou d'eau de rinçage des toilettes.
